**Europäisches Patentamt**

**European Patent Office**

**Office européen des brevets**

(19)

(11) Publication number: **0 032 798**
**A2**

(12) # EUROPEAN PATENT APPLICATION

(21) Application number: **81300110.4**

(22) Date of filing: **12.01.81**

(51) Int. Cl.³: **F 22 B 31/00,** B 01 J 8/24, F 23 C 11/02

(30) Priority: **16.01.80 US 112529**
**12.09.80 US 186474**

(43) Date of publication of application: **29.07.81**
**Bulletin 81/30**

(84) Designated Contracting States: **BE DE FR GB IT NL SE**

(71) Applicant: **Devanney, John W. III, c/o Martingale Inc. 119 Rowayton Avenue, Rowayton Connecticut 06853 (US)**

(72) Inventor: **Devanney, John W. III, c/o Martingale Inc. 119 Rowayton Avenue, Rowayton Connecticut 06853 (US)**

(74) Representative: **Roos, Michael John et al, KILBURN & STRODE 30 John Street, London WC1N 2DD (GB)**

(54) **Fluid bed combustor and process of producing a non-agglomerating vanadium coated particle.**

(57) A vertical tube fluidized bed boiler having a horizontal distributor plate is disclosed where the tubes are distributed substantially over the entire surface of the plate. The plate is constructed of novel tiles or sections that fit around the base of the tubes and which allow for the easy assembly and repair or replacement of the tube array.

The disclosure also relates to a process for the production of non-agglomerating vanadium coated particles comprising the combustion of a carbonaceous material or fuel containing relatively large amounts of vanadium in the presence of an oxidizing gas and a particulate substrate such as sand. A fluidized bed reactor is preferably used to carry out the process.

# FLUID BED COMPUSTOR AND PROCESS OF PRODUCING
# A NON-AGGLOMERATING VANADIUM COATED PARTICLE

Fluid-bed solid fuel combustors offer certain advantages over conventional boilers. Heat transfer conditions are poor in such conventional boilers due to the excessive volume flow of gas which removes too much heat. Temperature conditions within the combustion chamber vary substantially, and this leads to regions of high corrosion.

The fluidized bed combustor on the other hand overcomes many of these problems. By employing hot inert solid particles (e.g. ash or sand) in the bed, in one aspect of the present invention, heat is supplied to the fuel particles to raise them to combustion temperature. Adequate combustion oxygen is supplied through nozzles in the bed but the overall ratio of air volume to bed volume is relatively low - e.g. 1:160 as opposed to 1:40,000 for conventional boilers. The high heat capacity of the inert material, combined with the fluid or highly agitated nature of the bed, prevents the burning fuel from reaching excessive temperatures and helps maintain uniform temperatures throughout the bed. The hot inert material is, of course, an efficient means by which to transfer heat to the heat extraction tubes which pass through the bed.

Petroleum products high in vanadium and sulfur have been used as boiler fuels, however, their combustion results in the deposition of vanadium products on the walls and/or heat exchange tubes within the boilers. The deposited vanadium compounds result in high temperature slag corrosion.

The high temperature corrosion of boilers burning fuels containing vanadium is preceded by the formation of vanadium based slags on the interior of the boiler. A method of minimizing the formation of the vanadium based slags is to operate at combustion conditions that maximize the production of trivalent and tetravalent oxides of vanadium which have melting points of about 3,600°F which is considerably higher than the combustion temperatures obtained in these boilers. Vanadium oxides that are in the higher oxidation state, e.g. pentavalent and septavalent oxides of vanadium and complexes thereof have melting points from about 1,200° to about 1,3000°F. Formation of these compounds during combustion is to be avoided since they melt at or below the temperature range of the combustion process and will plate out or adhere to various critical boiler parts such as heat exchange tubing and the like. It is believed that the pentavalent and septavalent vanadium oxides adhere to the boiler surfaces and the sulfer by-products of the combustion process become entrained in the vanadium oxides along with other by-products of combustion thereby causing the formation of slag on the tube. As the slag increases in thickness, the temperature of the coating increases, destroys the protective oxide film on the boiler tubing, after which tube components are leached into the slag. The method employed by the prior art to minimize corrosion was to reduce the amount of air in the combustion process and thereby minimize the formation of the pentavalent and septavalent low melting oxides of vanadium while maximizing the high melting trivalent and tetravalent oxides of vanadium. In any event, the prior art method of reducing the air/fuel ratio did not substantially eliminate vanadium corrosion.

## BRIEF SUMMARY OF THE INVENTION

The applicant has invented a fluid combustor having substantially vertical heat extraction tubes which pass through a horizontal distributor plate which supports the fluid bed. Heat transfer rates are improved in that vertically oriented tubes offer less interference to the flow of the bed particles than prior art horizontal tubes. It has also been discovered that tube wear or erosion is substantially lessened.

Of particular importance is the capability with vertically oriented tubes to continuously and yet efficiently vary the bed height. This is of particular importance because by varying the bed height, one is able to infinitely control the power output of the combustor. This capability is to be distinguished from that of conventional fluid bed combustors wherein a drop in the fluid bed height would cause the horizontal heat extractor tubes to be above the bed and hence would immediately and drastically reduce power output - e.g. to almost zero, whereas all vertical tubes are always in the bed.

The tubes according to the present invention pass through the distributor plate vertically or substantially so at points located over substantially the entire distributor plate surface and hence extract heat in a substantially uniform manner from the entire fluid bed.

The present invention also makes it possible to take advantage of the natural water circulation effect normally attainable in a vertically oriented system. Thus in a closed loop system the water heated in the heat extraction tubes, being less dense than cooler water returning from the condensor, naturally rises in the tubes toward the steam generating apparatus while the cooler water from which steam has been extracted falls to a drum located beneath the distributor plate to rise again through the heat extractor tubes. This natural circulation is not only highly efficient but it substantially eliminates the need for expensive pumps and the like.

The distributor plate of the present invention is constructed of a plurality of tiles having scalloped edges, which partially extend around the tubes. Scallops on opposing plates are arranged to completely envelop a tube. These tiles allow for the easy assembly and repair or replacement of the tubes in the boiler array.

The fluid bed combustor in another aspect of the invention has demonstrated the capability of absorbing sodium, vanadium, sulfur and potassium in the bed material. This capability minimizes corrosion or fouling especially when residual fuels are burned such as petroleum coke or other fuels high in vanadium.

The present invention obviates the difficulties encountered in the prior art burning of fuels containing vanadium by removing the vanadium as a coating on a particulate substrate such as silica. The coating is preferably formed during combustion on a substrate suspended as a fluidized bed and in the presence of an oxidizing gas used to support the bed. The process has the dual advantage of producing a particle that does not agglomerate and further results in the substantially complete capture of the vanadium thereby preventing it from plating out on any of the boiler parts. This phenomenon occurs even when high air fuel ratios are used which, according to the prior art tended to produce low melting oxides of vanadium and complexes thereof that would lead one to predict that agglomeration and plating would occur followed by vanadium corrosion of critical boiler parts.

## BRIEF DESCRIPTION OF THE DRAWINGS

The foregoing and other features of the present invention will be more readily apparent from the following detailed description and drawings of illustrative embodiments of the invention in which:

Fig. 1 is a schematic side view of a combustor according to the invention;

Fig. 2 is a top plan view of a portion of a distributor plate according to the invention; and

Fig. 3 is a fragmentary side view of said plate taken along line 4-4 of Fig. 2.

## DESCRIPTION OF THE EXEMPLARY EMBODIMENT

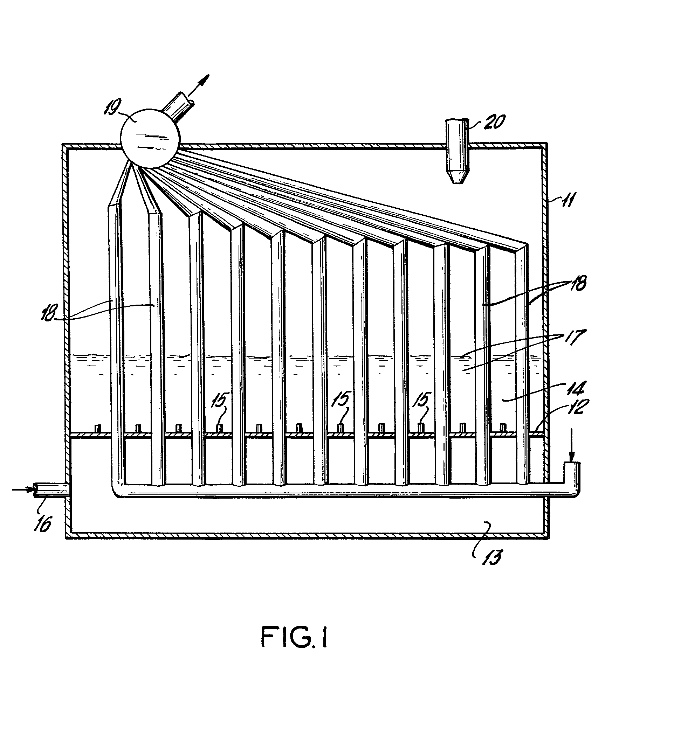

Looking to Fig. 1, there is shown a schematic side view of a fluid bed combustor 11 having a horizontally oriented distributor plate 12.  The distributor plate, which will be described in greater detail below, separates the interior of the combustor into a lower plenum 13 and an upper combustion zone 14.  As is the case with a conventional fluid bed combustor, nozzles 15 are substantially uniformly spaced over the plate surface and, as the plenum is pressurized with combustion gas, e.g. air, from source 16 the combustion gas is injected through the nozzles into the combustion zone 14.

In the combustion zone, a layer or bed 17 of particulate inert material, such as sand or ash, is supported on the distributor plate 17.  It is this bed which becomes "fluidized" when sufficiently raised and agitated by the combustion gases supplied through the nozzles 15.  By "fluidized", a term well understood in fluid bed combustor art, it is meant that the agitated bed demonstrates properties of flow, buoyancy, etc. much like those of a fluid.

The bed has mixed therein the fuel to be burned, e.g. coal, petroleum coke or the like.  The fuel is supplied to the bed by means readily apparent to one skilled in the art and such means, as well as known means for removing ash, are not discussed here or shown in the schematic of Fig. 1.

In order to remove heat from the combustion zone, e.g. to be used to generate steam, heat extractor tubes 18, containing a vapor-generating fluid such as water, are provided.  These tubes pass upwardly through the distributor plate and through the bed 17. In order to thus pass through the plate and bed, the tubes are substantially vertically oriented, at least in the vicinity of the plate. It will of course be apparent to one skilled in the art that the vertical orientation of the heat extractor tubes can be varied significantly - the term "vertical" being used herein to mean a direction which permits tubes to easily pass upwardly from the plenum through the distributor plate and into the combustion zone. This is to be contrasted with conventional fluid bed combustors wherein the heat extractor tubes do not pass through the distributor plate (except perhaps at a conventional waterwall) and hence must assume at least a partially horizontal orientation within the bed.

It will also be readily apparent that once the tubes pass through the plate and at least partially through the bed, they may be bent or turned to accomodate the structure and function of the particular combustor. In the schematic of Fig. 1, the tubes are eventually directed to a drum 19 and beyond for purposes of extracting energy in the form of steam.

While Fig. 1 shows only a single set of heat extractor tubes, there may also be employed additional sets of tubes, which may or may not pass through the distributor plate, for purposes of preheating, superheating, etc. It is, nonetheless, an important feature of the invention that at least a substantial number of heat extractor tubes pass vertically through the distributor plate.

As mentioned above, in previous fluid bed combustors it was not thought to be practical to pass the heat extractor tubes vertically through the distributor plate. This was due to problems encountered with thermal expansion as well as difficulty in constructing a workable system. In the preferred embodiment of the present invention, there is provided a distributor plate which is both economical to construct and practical to use.

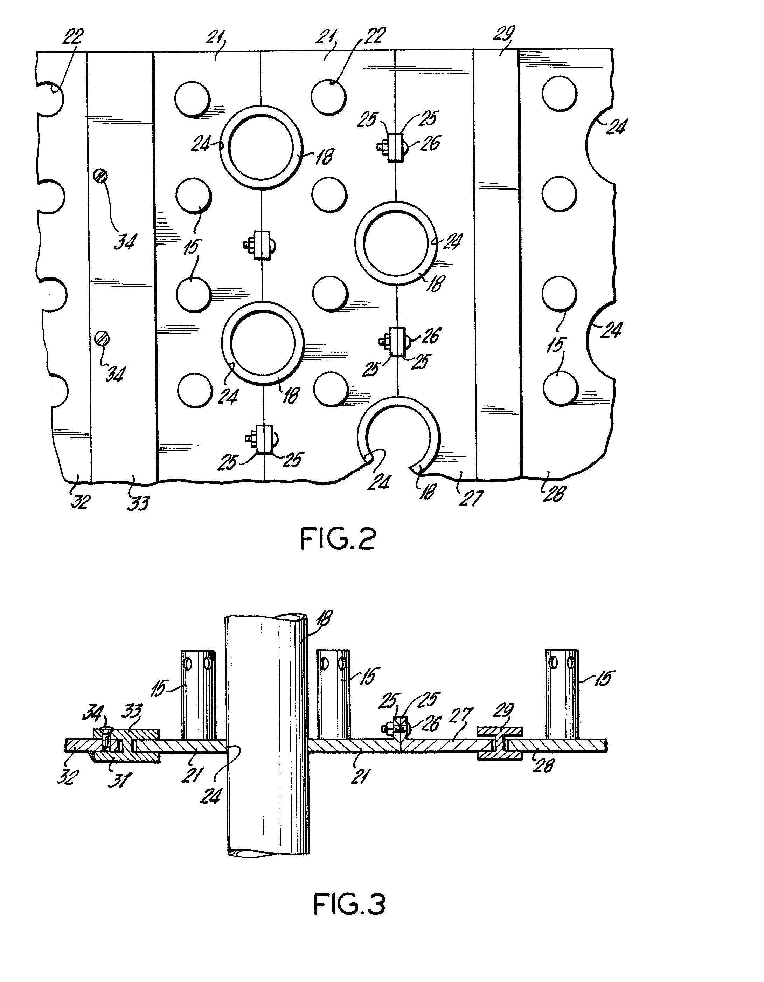

Looking to Figs. 2 and 3, the plate is comprised of a number of segments or tiles. These tiles have holes 22 drilled or otherwise provided therein on top of which are attached nozzles 15. The nozzles communicate with the plenum and air is injected through the nozzles both to fluidize the bed and to provide combustion air.

The sides of each tile are scalloped by indentations 24 which, when aligned with corresponding indentations in an adjoining tile, form holes in the plate through which the tubes 18 pass. It can be seen from Fig. 2 that the tubes 18 are located substantially uniformly over the entire distributor plate surface and hence are capable of extracting heat from virtually the entire fluid bed volume. The individual tiles may be supported in any convenient manner such as at the ends thereof and/or by welds or projections on the tubes 18.

In order to construct the plate, one simply starts at one end of the combustor and lays in a tile. A row of heat extractor tubes is then erected followed by the laying in of the next tile. The tiles are attached to adjoining tiles by bolting, welding or any other suitable means. In the embodiment depicted in Figs. 2 and 3, the tiles have flanges 25 through which bolts 26 are passed in order to lock adjacent tiles together.

Depending upon the overall geometry of the combustor, it is preferred that one or more expansion joints be provided in the distributor plate. In the preferred embodiment, this joint is accomplished by leaving a gap between two adjacent tiles 27, 28 and bridging this gap with an H-channel 29. As shown in Fig. 3, the H-channel 29 may be slightly larger than necessary to accommodate the tiles since this will facilitate the movement of the tiles in the H-channel. Moreover, even if slightly oversized, the H-channel does not permit significant leakage of particles from the fluid bed into the plenum since the H-channel is forced upwardly against the plate when the bed is fluidized (i.e. by the pressure in the plenum) and downwardly against the plate when the bed is slumped (i.e. by the weight of the bed). As is the case with the tiles, the H-channel may be supported in any convenient manner - e.g. at the ends.

It will also be noted from Fig. 2 that all of the tiles need not be identical. In Fig. 2, tile 27 immediately adjacent the expansion joint has no nozzles while tile 28 does have nozzles. The important consideration here is that the nozzles 15 and the tubes 18 be spread over the distributor plate surface sufficiently so that substantially the entire bed is fluidized and heat is efficiently extracted from substantially the entire fluid bed volume.

Again depending upon the overall geometry of the combustor, an expansion gap may similarly be provided around the periphery of the distributor plate.

In order to fit in the final tile into the plate, a split channel may be provided as in Fig. 3. This split channel is comprised of a strip-portion 31 which is attached (e.g. welded) to one tile 32. A T-portion 33 of the split channel is then laid into the space between the tiles and also attached to tile 32 by a screw 34 or the like. As was the case with the H-channel 29, the split channel may be supported in the combustor in any suitable manner.

In actual operation, the bed 17 is fluidized by the injection of air into the bed through the nozzles 15. In order to commence combustion, an oil-fired burner 20 or other known means is used to heat the bed. When the bed is heated to about 700-900°F, solid fuel in the form of 3/4 inch or smaller chunks is introduced into the bed. Once the bed reaches a sufficiently high temperature, e.g. 1350°F, combustion in the bed will become self-supporting and the oil burners are then shut down.

At full power, the bed stabilizes at a temperature (e.g. about 1575°F) below which the bed particles, including ash, tend to slag. There is thus overcome the problem of slagging (with accompanying fouling of the combustor) which is otherwise encountered in the high temperature burning of solid fuels.

As mentioned above, one of the important advantages of the combustor according to the invention is that the degree of bed fluidizing may be varied in a continuous or infinite manner between the two extremes of fully slumped and fully fluidized. As the bed is partially slumped, it is possible to reduce the power output of the combustor gradually over a relatively wide range.

Another advantage offered by the present invention is that it may be easily incorporated into or converted from a conventional oil fired combustor. Merely by assembling the tiles and tubes as described above, the former combustion chamber is converted into a two-chamber system comprising a plenum beneath the tile distributor plate and a fluid bed combustion zone above. This ability to convert an oil fired combustor to a fluid bed solid fuel (e.g. coal) combustor is of course of particular importance in view of the increasing cost of oil as compared to more plentiful solid fuels.

The present invention has been reduced to practice and used successfully in the form of a 1.5 million BTU/hr. combustor employing both ferritic and austenitic heat extractor tubes. This combustor has been operated at a variety of temperatures with different fuels and bed materials. It is contemplated that combustors substantially smaller or larger could also be successfully operated.

Apparatus such as that of Fig. 1 was used for conducting several tests using a high purity silica sand bed (12-30 mesh A.S.M.E.11) and petroleum coke or a coke sometimes referred to in the art as a delayed coke having a vanadium content of approximately 450 PPM. The combustor or firebox conditions were controlled to produce bed temperatures between 1,500° and 1,600°F, superficial velocities between about 7.5 feet/second to about 10 feet/second and excess air levels between 12 and 50%.

Combustion efficiencies measured during the test program ranged between 70 and 90%. A solids recycle system is employed comprising a cyclone separator known in the art and a recycle rate was estimated to be between 1,000 and 1,500 PPH. The solids recycle stream consists substantially of bed fines and unburned fuel. Materials not recycled were captured in a bag-house which is also known in the art. The elutriation of bed fines was estimated to be about 2% per hour.

The tests were run in an 18 inch by 18 inch combustor in plan view generating 1 million B.T.U.'s/hour.

The combustor is an atmospheric fluidized bed, refractory lined to an active fluidizing area of 2.25 square feet. The mild steel shell comprising the outer wall is protected by a three inch lining of high duty fireclay brick and two inches of block insulation. The combustor is operated with a bed depth of 30-40 inches which allows for a freeboard height of approximately 6 to about 7 feet.

Combustion efficiencies were measured and are believed to be affected by bed depth, more so than any other factor.

After firing for 48 hours, analyses of the bed material and the baghouse material by microscopic examination, x-ray diffraction analysis, scanning electron microscope and electron probe indicate that when quartz sand is used as the bed material in the fluidized bed burning of the petroleum coke, the impurities in the coke form a solid crystalline product on the quartz surfaces and are thereby trapped in the fluid bed. Substantially all of the vanadium in the petroleum coke is captured by the quartz surface and unexpectedly large quantities of sulfur are also trapped as a solid material. The surface phases which increase in thickness with time are compounds of vanadium, sulfur, iron, calcium and aluminum with other minor elements included in the crystal structures. During the burning, a black material is produced that is collected in the baghouse along with fine particles of quartz having the same coating material on it as the quartz material in the bed i.e. a crystalline compound of vanadium, sulfur, iron calcium and aluminum with other minor elements in the crystal structure. The black material found in the baghouse is a grainy, opaque material containing a considerable amount of a glassy product and major amounts of carbon and sulfur, and lesser amounts of vanadium. About 70% of the material recovered in the baghouse comprises the aforementioned silica having the solid crystalline product on the surface and the balance of about 30% is made up of the black material containing the glassy product having major amounts of carbon and sulfur and smaller amounts of vanadium.

Grains of bed material were mounted and chemically analyzed by electron probe technique. The excited X-radiation produced by this method was analyzed by passing the radiation through a lithium fluoride crystal, a PET crystal and a quartz crystal. All samples were examined for vanadium by focusing the beam on the surface of the grains. There is some irradiation of the quartz grains below the surface which tends to reduce the observed values.

Qualitatively, all quartz grains both from the bed and the baghouse show the vanadium present after firing. Quantative analyses were made by comparing peak heights with standards. The results indicate that the bed material, after examining eight grains of quartz contained on the average of 1.88 weight percent, the maximum vanadium found in the sample being 3,52 weight percent. Certain grains were sectioned and the interior was examined for vanadium but none showed levels greater than 0.01 weight percent. The sectioned grains indicate a surface coating which is about 5 microns thick after 16 hours and about 15 microns thick after 48 hours. The silica material in the baghouse contained the same amounts of vanadium as the silica from the bed.

The quartz fluidized bed material and the black material obtained from the baghouse were analyzed by using an electron probe for a complete elemental analysis. The probe cannot detect elements lighter than fluorine i.e. hydrogen, helium, lithium, berylium, boron, carbon, nitrogen and oxygen. The analysis of the quartz material in the bed by this method indicated the presence of major elements comprising silicon, vanadium, calcium, aluminum, sulfur and iron. The minor elements found in the bed material comprise nickel, sodium and potassium whereas traces of phosphorous and zinc were also detected. The black material showed sulfur as the major component, minor amounts of vanadium and no trace elements. The silicon and aluminum in the bed material are most likely from the underlying quartz. The balance of the materials found on the bed material were deposited on the surface. Quantative analyses by the electron probe method indicated that the bed material contained 2.01 plus or minus 0.21 weight percent of sulfur from the examination of 6 grains of bed material, the highest concentration found being 5.70 plus or minus 0.47 weight percent of sulfur. The black material contained on the average 4.47 plus or minus 0.11 weight percent sulfur from the examination of 6 grains of fly-ash material the highest amount of sulfur being 5.43 plus or minus 0.07 weight percent. Iron concentration in the silicon bed material on the average comprised 9.75 plus or minus 0.50 weight percent upon the examination of 4 grains, the highest amount being 13.9 plus or minus 0.90 weight percent iron. Iron was not detected in an examination of 10 grains of the black material obtained from the baghouse. The foregoing concentrations of material on the bed quartz are surface concentrations and not the overall weight percent of the grain examined.

During runs of 48 and 60 hours no vanadium deposits or build-up on the metal boiler tubes is observed even though 20-30% excess air is employed in the process. Neither slag, nor vanadium metal or oxides or mixtures of vanadium metal or oxides with sulfur or other elements in the fuel are found on the heat exchange tubes. The data obtained indicate that when the process is conducted utilizing between 20 to 30% excess air, vanadium build-up on the heat exchange tubes or slag build-ups or corrosion of the heat exchange tubes should occur in view of the prior art Brinser et al. article The Society of Naval Architects and Marine Engineers Transactions Vol. 85, 1977, pp. 271-299. This article teaches that slags develop with 3% excess air and contain a ratio of vanadium pentoxide (M.P. 1247°, 1274°F.) to vanadium trioxide-tetraoxide, (both having a melting point of 3578°F.) of about 0.5 whereas slags develop with 10% excess air contain a ratio of about 9.0. From these data, it would be expected that large quantities of excess air as employed by the present invention, would produce the lower melting oxides of vanadium melting at about 1,250°F. and would be liquid at the 1,500°F. bed temperature causing the bed particles to agglomerate. Agglomeration did not occur nor did any coating of vanadium and other elements appear on the surface of the metal heat exchange tubes immersed in and over the bed. These results are totally unanticipated and unpredictable from the prior art.

By employing this process baghouse material containing better than 6,900 PPM vanadium from the fuel containing 620 PPM vanadium (both measurements by emission spectroscopy) have been produced.  Between about two to about six average weight percent of sulfur has been observed in the surface layers using a 3 to about 5 percent sulfur fuel.  The sulfur in the surface layer represents less than about 5 percent of all the sulfur burned and is a useful means of capturing sulfur whereas the process whereby silica coated with vanadium is obtained is a useful method for capturing vanadium from the fuel material.

The baghouse silica as well as the bed silica, both of which have vanadium coatings, can be further processed to recover vanadium in another aspect of this invention. The vanadium may be extracted by methods well known in the art.  The conditions of the process of the present invention may also be adjusted so as to further increase the amount of sulfur recovered which is useful as a method for not only recovering sulfur but also for reducing air pollution.  As the process is now disclosed, it also provides a method for recovering sulfur when burning a sulfurous fuel.

Although the invention has been described by reference to some of the embodiments, it is not intended that the novel apparatus, process or the product produced by this process be limited thereby and that modifications thereof are intended to be included as  falling  within in the broad spirit and scope of the  foregoing disclosure, the following claims and the appended drawing.

WHAT IS CLAIMED IS:

1. Fluid bed apparatus comprising a chamber for containing a bed of relatively inert particles and having a substantially horizontal distributor plate, a plurality of heat extractor tubes which pass upwardly through said plate in a substantially vertical direction, said tubes being distributed substantially over the entire plate surface so as to permit efficient heat extraction from the entire fluid bed volume, and means for supplying fluidizing gas through said plate to fluidize the bed.

2. Fluid bed apparatus according to claim 1, wherein said means for supplying said gas comprises a plenum beneath said plate and nozzles in said plate through which said gas from the plenum passes into the bed.

3. Fluid bed apparatus according to claims 1 or 2 wherein said distributor plate is comprised of a plurality of elongated tiles aligned adjacent one another, at least some of said tiles having scallops spaced along the side edges thereof such that when one scalloped tile is placed adjacent a correspondingly scalloped tile, the scallops of said one tile will be in register with the scallops of the adjacent tile so as to form holes through which said heat extractor tubes may be passed.

4. Fluid bed apparatus according to claim 3 wherein at least two adjacent tiles are separated by an expansion joint.

5. Fluid bed apparatus according to claim 4, wherein said expansion joint comprises a H-channel having channels on opposite sides thereof, said channels engaging the adjacent edges of said two tiles and being sufficiently large as to permit movement of said tiles within said channels.

6.　　　Fluid bed apparatus according to claim 3, wherein two tiles are separated by and held in place by a split channel, said split channel comprising a bottom strip portion fixedly attached to the underside of one of said tiles and extending along the side edge of said tile, said strip portion further extending outwardly from said tile so as to underlie at least a portion of said other tile, a T-portion overlying and extending along the respective near edges of both said tiles, said T-portion being attached to said one of said tiles.

7.　　　A method of constructing fluid bed apparatus comprising providing a distributor plate and heat extractor tube arrangement in a chamber and including the steps of supporting within said chamber a first elongated tile, said tile having along its edge scallops, thereafter erecting a row of substantially vertically oriented heat extractor tubes, each tube being set in a respective scallop; thereafter laying in and supporting a next tile, said next tile having scallops corresponding to and in register with the respective scallops in said first tile such that holes are provided in the plate thereby formed from said tiles through which said tubes are passed; thereafter alternately erecting and laying in respective rows of tubes and tiles so as to form a plate having heat extractor tubes spaced substantially over the entire plate surface, said plate separating the chamber into a lower plenum and an upper combustion zone, said plate further having nozzles spaced substantially over the entire plate surface, said nozzles adapted to supply gas from said plenum into said combustion zone so as to support combustion and to fluidize a bed of particulate matter supported on said plate.

8.    A tile for the construction of a distributor plate for a fluid bed apparatus comprising a tile having scallops spaced along at least one of the side edges thereof such that when one scallopped tile is placed adjacent a correspondingly scallopped tile, the scallops of said one tile will be in register with the scallops of the adjacent tile so as to form holes through which a heat extractor tube in a fluid bed apparatus may be passed, said tile having nozzle means through which pressurized gas may be passed into a fluid bed apparatus for fluidizing a particulate bed in a fluid bed apparatus.

9.    The process of producing a non-agglomerating vanadium coated particle comprising the combustion of a carbonaceous material containing up to about 5,000 PPM vanadium in the presence of an oxidizing gas, said combustion being conducted in the presence of a particulate substrate whereby said vanadium is coated onto said particulate substrate.

10.    The process of claim 9, where said process is carried out on a fluidized bed of said substrate supported on said oxidizing gas, and including bringing said carbonaceous material into said fluidized bed.

11.    A product produced by the process of claim 9 or claim 10.

0032798

12.	A process for preventing metal heat exchange tubes immersed in a firebox from being coated with vanadium from a petroleum fuel high in vanadium comprising the combustion of said petroleum fuel in the presence of an oxidizing gas and a particulate substrate in a firebox having a fluidized bed of said substrate supported on said gas, said metal heat exchange tubes being positioned adjacent said bed, the vanadium in said fuel differentially forming a non-agglomerating coating of vanadium on said substrate.

FIG.1

FIG.2

FIG.3